# EUROPEAN PATENT APPLICATION

(11) **EP 2 781 717 A1**
(43) Date of publication of application: **24.09.2014**
(21) Application number: 13192392.2
(22) Date of filing: 11.11.2013
(51) Int. Cl.: F02B 39/10, F02D 41/00

(54) **Electronic car supercharger with brushless motor**

(30) Priority: 18.03.2013 US 201313845197
(71) Applicant: Cheng, Ming-Hung, Sioushuei Township, Changhua County (TW)
(72) Inventor: Cheng, Ming-Hung, Sioushuei Township, Changhua County (TW)
(74) Representative: Hosenthien-Held, Jutta

(57) **Abstract**

An electronic car supercharger includes a housing (10), an air inlet pipe (12) connected with the housing and an engine chamber (20), a filtering net (11) connected with the housing, a motor cabinet (13) mounted in the housing, a brushless motor (30) mounted on the motor cabinet, an air inlet fan (31) connected with the brushless motor, a circuit board (40) connected with the brushless motor, a battery (60) connected with the circuit board, and a control switch (70) connected with the circuit board and an accelerator pedal (80). Thus, when the accelerator pedal is released, the control switch is detached from the accelerator pedal, and the brushless motor stops operating by the control switch to stop operation of the air inlet fan to prevent the air inlet fan from producing noise under idling operation of the car engine.

## Description

The present invention relates to a supercharger and, more particularly, to an electronic car supercharger.

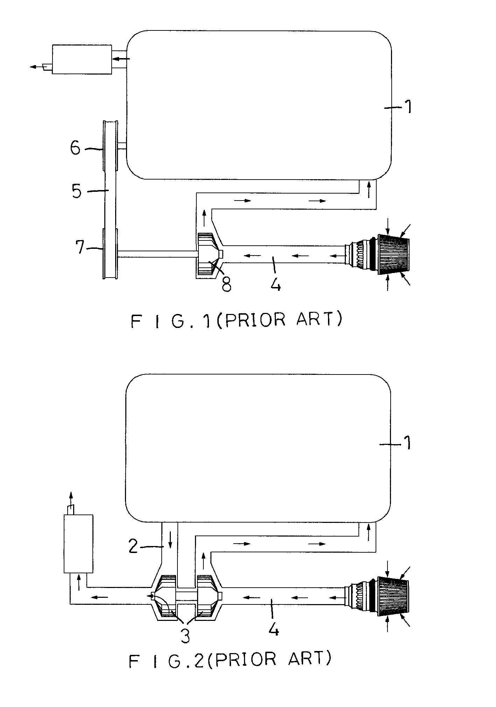

A conventional car supercharger in accordance with the prior art shown in FIG. 1 is connected with a car engine 1 and comprises an air inlet pipe 4, an air inlet fan 8, a belt 5, a first belt wheel 6, and a second belt wheel 7. The air inlet pipe 4 is connected to the car engine 1. The air inlet fan 8 is mounted in the air inlet pipe 4. The first belt wheel 6 is connected with the car engine 1. The second belt wheel 7 is connected with the air inlet fan 8. The belt 5 is mounted between the first belt wheel 6 and the second belt wheel 7. When in use, the car engine 1 drives the first belt wheel 6 which drives the belt 5 which drives the second belt wheel 7 which drives the air inlet fan 8 so that the air inlet fan 8 is rotated in the air inlet pipe 4 to increase the air flow from the air inlet pipe 4 into the car engine 1 so as to enhance the working efficiency of the car engine 1. However, when the car engine 1 is under idling operation, the air inlet fan 8 is operated successively so that the air inlet fan 8 easily produces noise under the idling operation of the car engine 1, thereby causing an uncomfortable sensation to the driver.

A conventional car turbocharger in accordance with the prior art shown in FIG. 2 is connected with a car engine 1 and comprises an air inlet pipe 4 connected to the car engine 1, and a turbine 3 mounted in the air inlet pipe 4. When in use, the car engine 1 produces wasted gas 2 during operation. The wasted gas 2 produced by the car engine 1 drives the turbine 3 which is rotated in the air inlet pipe 4 to increase the air flow from the air inlet pipe 4 into the car engine 1 so as to enhance the working efficiency of the car engine 1. However, when the car engine 1 is under idling operation, the turbine 3 is operated successively so that the turbine 3 easily produces noise under the idling operation of the car engine 1, thereby causing an uncomfortable sensation to the driver. In addition, when the car engine 1 is operated at a lower rotation speed, the flow rate of the wasted gas 2 is reduced so that the wasted gas 2 cannot drive the turbine 3 efficiently, thereby decreasing the working efficiency of the car engine 1.

The primary objective of the present invention is to provide an electronic car supercharger with a brushless motor.

In accordance with the present invention, there is provided an electronic car supercharger, comprising a housing, an air inlet pipe connected with a first end of the housing and connected with an engine chamber, a filtering net connected with a second end of the housing, a motor cabinet mounted in the housing, a brushless motor mounted on the motor cabinet, an air inlet fan connected with the brushless motor and facing the filtering net, a circuit board electrically connected with the brushless motor, a battery electrically connected with a circuit of the circuit board, and a control switch electrically connected with the circuit of the circuit board. The housing is connected to the engine chamber through the air inlet pipe. The battery provides an electric power to the brushless motor to operate the air inlet fan. The control switch is connected with an accelerator pedal. The control switch controls operation of the brushless motor in a stepless manner to control an operation speed of the air inlet fan. The accelerator pedal has an operation portion that is movable to touch the control switch. When a pedaling force applied on the accelerator pedal disappears, the control switch controls the brushless motor to stop operating so that the air inlet fan stops operating.

Preferably, the electronic car supercharger further comprises a retainer mounted on the filtering net to lock the filtering net onto the housing.

Preferably, the electronic car supercharger further comprises a fuse electrically connected with a circuit of the circuit board.

According to the primary advantage of the present invention, when the accelerator pedal is released from a driver's foot, and the car engine is under an idling operation, the control switch is detached from the accelerator pedal, and the brushless motor stops operating by control of the control switch to stop operation of the air inlet fan instantaneously so as to prevent the air inlet fan from producing any noise under the idling operation of the car engine.

According to another advantage of the present invention, when the oil inlet flow of the engine chamber is increased, the rotation speed of the brushless motor and the air inlet fan is increased, and the air inlet flow of the air inlet fan is increased, and when the oil inlet flow of the engine chamber is decreased, the rotation speed of the brushless motor and the air inlet fan is decreased, and the air inlet flow of the air inlet fan is decreased, so that the driver can control the rotation speed of the brushless motor and the air inlet fan by stepping the accelerator pedal in a stepless manner.

According to a further advantage of the present invention, the driver only needs to release the accelerator pedal so as to stop operation of the air inlet fan and to prevent the air inlet fan from producing noise under the idling operation of the car engine, thereby facilitating the driver controlling the electronic car supercharger.

In the drawings:
FIG. 1 is a schematic operation view of a conventional car supercharger in accordance with the prior art.
FIG. 2 is a schematic operation view of a conventional car turbocharger in accordance with the prior art.
FIG. 3 is an exploded perspective view of an electronic car supercharger in accordance with the preferred embodiment of the present invention.
FIG. 4 is a top assembly view of the electronic car supercharger as shown in FIG. 3.
FIG. 5 is a front assembly view of the electronic car supercharger as shown in FIG. 3.
FIG. 5a is a locally enlarged view of the electronic car supercharger as shown in FIG. 5.
FIG. 6 is a locally enlarged operational view of the electronic car supercharger as shown in FIG. 5.
FIG. 7 is a locally enlarged cross-sectional operational view of the electronic car supercharger as shown in FIG. 5.
FIG. 8 is a further operational view of the electronic car supercharger as shown in FIG. 6.
FIG. 9 is a further operational view of the electronic car supercharger as shown in FIG. 7.

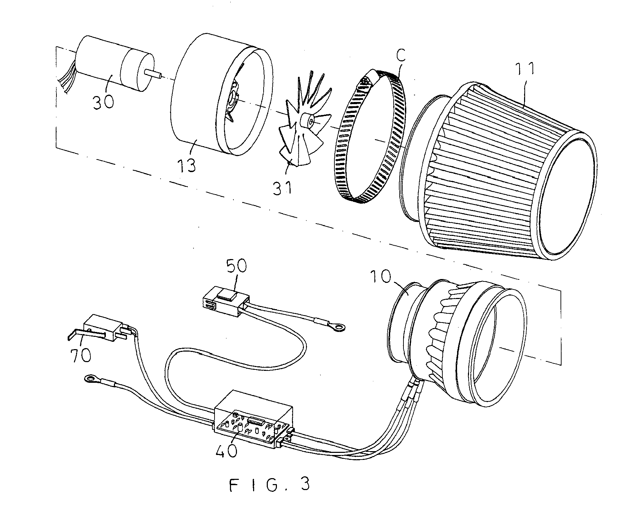

Referring to the drawings and initially to FIGS. 3-7, an electronic car supercharger in accordance with the preferred embodiment of the present invention comprises a housing 10, an air inlet pipe 12 connected with a first end of the housing 10 and connected with an engine chamber (or combustion chamber) 20, a filtering net 11 connected with a second end of the housing 10, a retainer "C" mounted on the filtering net 11 to lock the filtering net 11 onto the housing 10, a motor cabinet 13 mounted in the housing 10, a brushless motor 30 mounted on the motor cabinet 13, an air inlet fan 31 connected with the brushless motor 30 and facing the filtering net 11, a circuit board 40 electrically connected with the brushless motor 30, a battery 60 electrically connected with a circuit of the circuit board 40, a fuse 50 electrically connected with a circuit of the circuit board 40, and a control switch 70 electrically connected with the circuit of the circuit board 40.

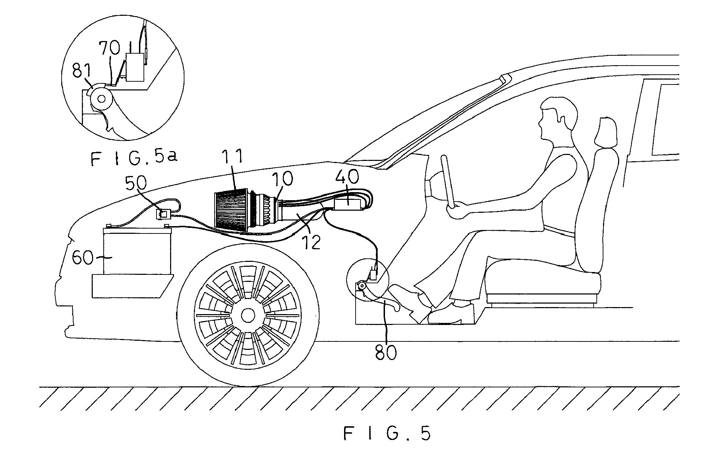

The housing 10 is connected to the engine chamber 20 through the air inlet pipe 12. The fuse 50 is provided to prevent the brushless motor 30 from being burned or worn out due to an overload. The battery 60 provides an electric power to the brushless motor 30 to operate the air inlet fan 31. The control switch 70 is connected with an accelerator pedal 80. The control switch 70 controls operation (on/off) of the brushless motor 30 in a stepless manner to control an operation speed of the air inlet fan 31. The accelerator pedal 80 has an operation portion 81 (see FIG. 5a) that is movable to touch the control switch 70. When a pedaling force applied on the accelerator pedal 80 disappears, the control switch 70 controls the brushless motor 30 to stop operating so that the air inlet fan 31 stops operating.

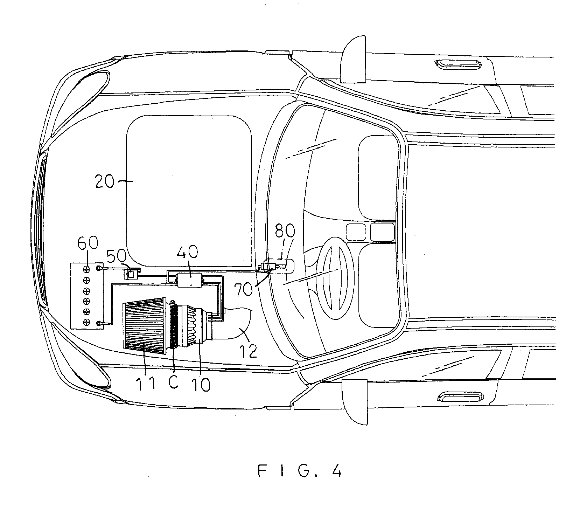

Referring to FIGS. 5 and 5a with reference to FIGS. 3 and 4, when the accelerator pedal 80 is released from a driver's foot, the brushless motor 30 stops operating by control of the control switch 70 to stop operation of the air inlet fan 31 so as to prevent the air inlet fan 31 from producing noise.

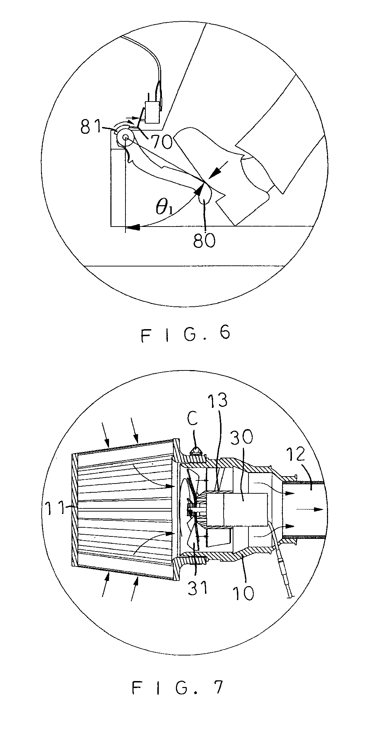

Referring to FIGS. 6 and 7 with reference to FIGS. 3 and 4, when the driver's foot slightly (with a greater open angle θ₁) pedals the accelerator pedal 80, the operation portion 81 of the accelerator pedal 80 slightly presses the control switch 70 so that the control switch 70 is triggered to reduce the rotation speed of the brushless motor 30 and to reduce the rotation speed of the air inlet fan 31. At this time, the oil inlet flow of the engine chamber 20 is decreased to decrease the rotation speed of the brushless motor 30 so as to decrease the rotation speed of the air inlet fan 31, and to decrease the air inlet flow of the air inlet fan 31.

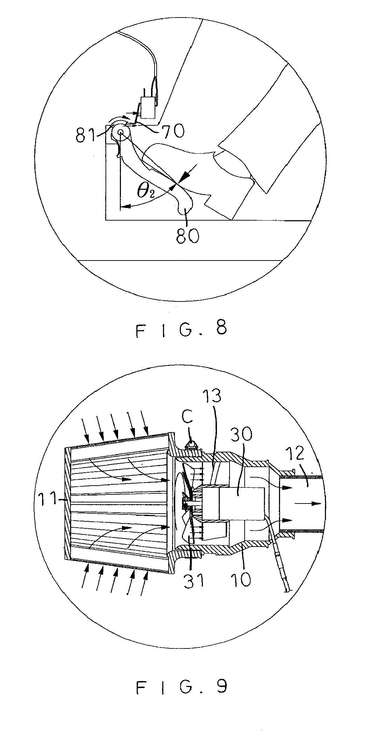

Referring to FIGS. 8 and 9 with reference to FIGS. 3 and 4, when the driver's foot heavily (with a smaller open angle θ₂) pedals the accelerator pedal 80, the operation portion 81 of the accelerator pedal 80 heavily presses the control switch 70 so that the control switch 70 is triggered to increase the rotation speed of the brushless motor 30 and to increase the rotation speed of the air inlet fan 31. At this time, the oil inlet flow of the engine chamber 20 is increased to increase the rotation speed of the brushless motor 30 so as to increase the rotation speed of the air inlet fan 31, and to increase the air inlet flow of the air inlet fan 31.

Accordingly, when the accelerator pedal 80 is released from a driver's foot, and the car engine is under an idling operation, the control switch 70 is detached from the accelerator pedal 80, and the brushless motor 30 stops operating by control of the control switch 70 to stop operation of the air inlet fan 31 instantaneously so as to prevent the air inlet fan 31 from producing any noise under the idling operation of the car engine. In addition, when the oil inlet flow of the engine chamber 20 is increased, the rotation speed of the brushless motor 30 and the air inlet fan 31 is increased, and the air inlet flow of the air inlet fan 31 is increased, and when the oil inlet flow of the engine chamber 20 is decreased, the rotation speed of the brushless motor 30 and the air inlet fan 31 is decreased, and the air inlet flow of the air inlet fan 31 is decreased, so that the driver can control the rotation speed of the brushless motor 30 and the air inlet fan 31 by stepping the accelerator pedal 80 in a stepless manner. Further, the driver only needs to release the accelerator pedal 80 so as to stop operation of the air inlet fan 31 and to prevent the air inlet fan 31 from producing noise under the idling operation of the car engine, thereby facilitating the driver controlling the electronic car supercharger.

## Claims

1. An electronic car supercharger, comprising:
a housing (10);
an air inlet pipe (12) connected with a first end of the housing and connected with an engine chamber (20);
a filtering net (11) connected with a second end of the housing;
a motor cabinet (13) mounted in the housing;
a brushless motor (30) mounted on the motor cabinet;
an air inlet fan (31) connected with the brushless motor and facing the filtering net;
a circuit board (40) electrically connected with the brushless motor;
a battery (60) electrically connected with a circuit of the circuit board; and
a control switch (70) electrically connected with the circuit of the circuit board;
wherein:
the housing is connected to the engine chamber through the air inlet pipe;
the battery provides an electric power to the brushless motor to operate the air inlet fan;
the control switch is connected with an accelerator pedal (80);
the control switch controls operation of the brushless motor in a stepless manner to control an operation speed of the air inlet fan;
the accelerator pedal has an operation portion (81) that is movable to touch the control switch; and
when a pedaling force applied on the accelerator pedal disappears, the control switch controls the brushless motor to stop operating so that the air inlet fan stops operating.

2. The electronic car supercharger of claim 1, further comprising:
a retainer (C) mounted on the filtering net to lock the filtering net onto the housing.

3. The electronic car supercharger of claim 1 or 2, further comprising:
a fuse (50) electrically connected with a circuit of the circuit board.
